Europäisches Patentamt

European Patent Office

Office européen des brevets

⑩

(11) Publication number: **0 186 324**
**B1**

(12) **EUROPEAN PATENT SPECIFICATION**

(45) Date of publication of patent specification: **13.06.90**

(21) Application number: **85308649.4**

(22) Date of filing: **28.11.85**

(51) Int. Cl.⁵: **F 16 F 9/44**

(54) **Hydraulic damper for a vehicle.**

(30) Priority: **24.12.84 US 685806**

(43) Date of publication of application:
**02.07.86 Bulletin 86/27**

(45) Publication of the grant of the patent:
**13.06.90 Bulletin 90/24**

(84) Designated Contracting States:
**DE FR GB IT**

(56) References cited:
**DE-A-3 246 697**
**DE-A-3 418 649**
**GB-A-2 119 473**
**US-A-2 467 098**
**US-A-3 827 538**

(73) Proprietor: **GENERAL MOTORS CORPORATION**
**General Motors Building 3044 West Grand**
**Boulevard**
**Detroit Michigan 48202 (US)**

(72) Inventor: **Fannin, Wayne Vincent**
**2098 Upper Bellbrook Road**
**Xenia Ohio 45385 (US)**
Inventor: **Buchanan, Harry Charles, Jr.**
**1274 Timberwyck Court**
**Spring Valley Ohio 45370 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to a hydraulic damper for a vehicle as specified in the preamble of claim 1, for example as disclosed in GB-A-2 119 473.

Prior to the present invention, various hydraulic dampers, in the form of shock absorbers or suspension struts, have been engineered with selectively variable orificing to control oil flow through a piston as it strokes in a cylinder tube, to provide a selectively variable damping force or resistance, and thereby control the action of associated vehicle suspension springs and the ride motion of the vehicle. Generally such dampers involve costly and relatively complex blowoff valving and controls, and are not suitable for quantity production.

Thus, for example, DE-A-3 246 697 discloses an elongated hydraulic damper in which a piston containing deflectable-disc flow control valves therein is mounted upon a connecting rod by means of a cylindrical nut containing a fluid-flow valve assembly in which a rotary valve controls the rate of flow of fluid from an upper reservoir in the damper to a lower reservoir in the damper in response to the actuation of a rack-and-pinion control located outside the damper, in order to modify at will the damping characteristics produced by the deflectable-disc flow control valves in the piston. The degree of modification to the damping action is governed by the clearance between an actuating rod for the valve and a bore in the connecting rod which houses the actuating rod, the size of a radial bore in the connecting rod, and by the degree to which the rotary valve is turned within the hollow cylindrical nut to expose one or more radial bores in the cylindrical nut.

A similar type of rotary valve damper control mechanism is disclosed in DE-A-34 18 649, in which the rotary valve control mechanism is housed inside a central cavity in a connecting rod, above a piston equipped with deflectable-disc flow control valves attached to the connecting rod adjacent the lower end thereof. The rotary valve control mechanism is actuated by an actuating rod housed in a central bore in the connecting rod, which actuating rod is rotated by a drive mechanism external of the damper. The degree of modification to the damping action is governed by the degree to which the rotary valve is turned within the central cavity in order to align with radial apertures of different sizes formed in the wall of the connecting rod. The control mechanism also includes a spring-biased ball valve which opens during downward movement of the connecting rod to allow fluid flow through additional apertures in the connecting rod in order to produce a further modification to the damping action.

The present invention is concerned with the provision of a hydraulic damper which utilises new and improved selectively registrable orifice valving for varying damping characteristics, and which involves minimum change to prior widely used piston valving and thereby to a significant extent eliminates the complexities and costs of extensive engineering and design work to produce an effective variable damper unit with improved and precision control of fluid flow through the reciprocatory piston of the damper.

To this end a hydraulic damper in accordance with the present invention is characterised by the features specified in the characterising portion of claim 1.

The present invention thereby makes available a hydraulic damper having a new and improved piston assembly incorporating a rotatable selector body that is operatively mounted on a central rivet forming a connector of a flexible disc pack, or similar deflectable-disc flow control valving means, of an orifice plate assembly. The orifice plate assembly preferably includes a main piston plate with rebound and compression flow passages therethrough primarily controlled by upper and lower deflectable disc packs. The selector body is turned in response to controls to various rotated positions to register and select orifices sized to further control the flow through the piston and thereby the resistance to reciprocation within the cylinder tube. The selector body is mounted on a cylindrical head of a central disc pack attachment rivet that has a plurality of arcuately spaced radial flow control orifices therein of varying size. These orifices connect into a centre passage in the rivet and co-operate therewith to form a selection of variable-capacity flow passages which hydraulically are in parallel with the primary flow passages in the piston plate controlled by the deflected disc packs. With such selectable capacity bypass orifice construction, hydraulic damping characteristics can be varied and selected for controlling piston velocity and suspension spring damping during a rebound stroke as well as during a compression stroke. With control by the deflectable disc pack and the restricted bypass orifices, hydraulic damping characteristics are varied and selected for controlling piston velocity and suspension spring damping, particularly during rebound although also during compression.

In a preferred embodiment of a hydraulic damper in accordance with the present invention, selector body rotation is controlled by a rotatable rod extending in a hollow piston rod from either an internal or an external actuator. If desired, the selector body can be rotated to a position in which the variable orificing has minimum flow capacity: with this orifice selection, the flow restriction through the piston is high and resistance to piston movement is high in both the rebound and the compression mode of operation. However, since compression loads are lighter, the orifice selection does not provide the same degree of control of the compression mode, and further detailed discussion particularly concerns the variation offered in controlling rebound. In any event, with high flow restriction the piston velocities are reduced, to provide for a stiff (hard) ride that may be desired under certain vehicle operating conditions such as high-speed cornering. When the selector body is rotated to a second, intermediate position, the orifice size is increased for medium, intermediate rebound damping action, and flow through the piston is increased: in such an intermediate condition the resistance of the fluid within the damper to piston movement in rebound is reduced. With such reduced resistance, piston velocity is increased, and the ride as a result is softer.

In a third position the orifice size is large and is the optimum for a soft ride, so that spring damping characteristics of the shock absorber are reduced. If even softer rides are desired, the number, location and size of the orifices can be engineered to provide for additional flow through the piston. With these selected orifice settings, the damper converts rebound motions into heat at selected rates so that road bumps are cushioned as desired by the vehicle operator. The variable orifice can be entirely closed if desired, so that piston velocities are in effect entirely controlled by the deflected disc pack for the hardest ride obtainable with this invention.

In the drawing:

Figure 1 is a fragmentary elevational view, with parts broken away and in section, of a preferred embodiment of a hydraulic damper in accordance with the present invention;

Figure 2 is a fragmentary sectional view generally on the line 2—2 of Figure 1, in the direction of the arrows, showing details of valving of a piston assembly of the damper shown in Figure 1;

Figure 3 is a cross-sectional view on the line 3--3 of Figure 2, in the direction of the arrows, showing a selector body and an orifice plate relatively rotated to one of a plurality of operating positions for controlling fluid flow through the piston assembly during rebound; and

Figure 4 is a graph illustrating operation of the hydraulic damper in accordance with the present invention.

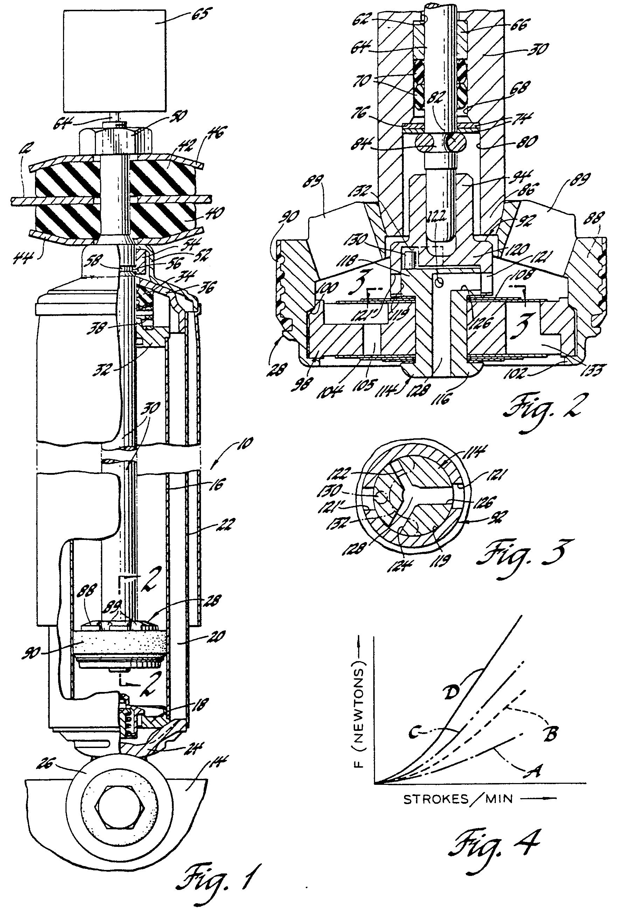

With reference now to the drawing, there is shown in Figure 1 a double-acting hydraulic damper 10 operatively mounted between sprung and unsprung components of a vehicle, here represented respectively by an upper support plate 12 connected to vehicle bodywork and a lower control arm 14 which is mounted to a steering knuckle and road wheel assembly. The damper 10 incorporates an elongated cylinder tube 16 having a conventional base valve 18 secured in the lower end thereof which controls the passage of oil between the cylinder tube and a surrounding oil reservoir 20 formed between the cylinder tube and a reservoir tube 22. The reservoir tube 22 is closed at its lower end by a base cup 24 on which the base valve 18 is seated. A lower mount 26 welded to the exterior of the base cup provides a conventional connection to the lower control arm 14.

A valved piston assembly 28 and a piston rod 30 connected thereto are operatively mounted for linear reciprocation in the cylinder tube during shock absorber operation. The piston rod 30 extends upwardly from the piston assembly 28 through a conventional rod guide 32 mounted in the upper end of the cylinder tube 16. The piston rod 30 further extends through an annular elastomeric seal 34 and through a cup-like seal cover 36 having a peripheral flange which fits into and is welded to the upper end of the reservoir tube 22. A helical spring 38 seated on the rod guide 32 and surrounding the piston rod 30 yieldably holds the seal 34 against the inner surface of the seal cover 36. The upper end of the piston rod 30 extends through a pair of elastomeric mounting discs 40, 42 and surrounding backing plates 44, 46 disposed on opposite sides thereof to sandwich the support plate 12 therebetween, with a nut 50 threadedly received on the end of the piston rod 30 sealing against the backing plate 46 and holding the elastomeric discs 40, 42 in compression.

A cup-like upper cover plate 52 through which the piston rod 30 extends is connected to the piston rod immediately below the backing plate 44 by a cylindrical retainer 54 and a co-operating snap ring 56 received in a groove 58 in the piston rod 30. The elastomeric mounting discs 40, 42 are effectively trapped between the upper and lower backing plates 46, 44, so isolating the piston rod 30 from the vehicle body, as is seen in Figure 1. The piston rod 30 has a central bore 62 for receiving an elongated actuator rod 64 that extends therethrough.

The actuator rod 64, driven by a suitable motor 65 which may be either external as shown or internal as described in EP-A-0155102, is operatively connected to valving in the piston assembly 28 described below. As shown, a lower end portion of the actuator rod 64 is rotatably mounted in a cylindrical bearing 66 which is press-fitted within a small-diameter counterbore 68 in the lower end of the piston rod 30. O-ring seals 70 fitted on the actuator rod 64 below the bearing 66 contact the walls of the counterbore 68 to block the passage of shock absorber oil through the central bore 62 to the exterior of the damper. The actuator rod 64 is retained in the central bore 62 of the piston rod by washers 74 seated against an end wall 76 of a larger diameter counterbore 80 formed in the piston rod 30 and by a stop ring 82 fitted into a transverse annular groove 84 in the actuator rod 64 at the bottom side of the washers 74. With such a construction, the actuator rod 64 cannot be inadvertently withdrawn from the piston rod 30.

The inner end 86 of the piston rod 30 is welded or otherwise fastened to a cylindrical shell-like main body 88 of the piston assembly 28. This main body has upper flow passages 89 therein and is peripherally bounded by a skirt 90 of Teflon (polytetrafluorethylene) or other suitable plastics material providing low-friction sliding engagement with the inner wall of the cylinder tube 16. Mounted for axial rotational movement within the confines of the main body 88 of the piston assembly 28 is a rotatable-orifice selector body 92 having an upstanding neck 94 keyed or otherwise connected to the end of the actuator rod 64 and received in the end of a large-diameter counterbore 80 in the lower end of the piston rod 30. In addition to the rotatable-orifice selector body 92, the main body 88 of the piston assembly 28 houses an orifice plate assembly comprising a cylindrical, relatively thick, fixed orifice plate 98. The orifice plate 98 is peripherally secured in the main body 88 of the piston between an inner locator shoulder 100 and an inwardly-coined lower annular end 102. A lower valve spring disc pack 104, comprising a series of flat washer-like valve discs of spring steel having successively decreasing diameters from top to bottom, is mounted adjacent the bottom of the orifice plate 98 to deflect downwardly in response to the force of jets of hydraulic fluid thereon through the passages 89 and passages 105 during a rebound stroke, to thereby control fluid flow through the orifice plate, and an upper valve spring disc pack 108, comprising a series of flat washer-like valve discs, is mounted adjacent the top of the orifice plate to deflect upwardly in response to the force of jets of hydraulic fluid during a compression stroke, to thereby provide control of fluid flow through the orifice plate during a compression stroke, as is known by those skilled in this art. The spring disc packs 104 and 108 are held in their operative position by a central rivet 114 having a lower coined end 116 and a cylindrical upper head 118, as shown in Figure 2.

The selector body 92 has a cylindrical shoulder portion 120 with an inner cylindrical wall 119 piloted on and rotatably mounted on the upper head 118 of the rivet and within the cavity of the main body 88 of the piston assembly 28 by rotation of the actuator rod 64 by the motor 65.

The selector body 92 has radial selector openings 121 and 121' therethrough which can be rotated into registry with first, second and third arcuately spaced passages 122, 124 and 126 extending radially from a central passage 128 for controlling the flow of shock absorber fluid through the rivet 114. The first passage 122 has the smallest diameter and capacity, and the second and third openings 124 and 126 respectively are progressively larger in diameter and fluid-handling capacity. Selector body rotation is controlled and limited by an upstanding pin 130 on the rivet head 118 which rides in an arcuate slot 132 in the shoulder portion 120 of the selector body 92. The contact of the pin 130 with the opposite ends of the slot 132 determines register of the radial passages 122 or 124 with the selector opening 121 or 121'. Registry of the passage 126 with the selector opening 121 can be effected by the use of a conventional internal stop or by using a stepping-type motor.

By rotation of the selector body 92 to selected positions by suitable control of the motor 65, various combinations of flow control orifices can be chosen to set the rebound damping characteristics of the shock absorber to meet the operator's requirements and demands. For example, if the selector body is rotated to the Figure 3 position in which the selector body opening 121 uncovers the large-diameter radial passage 126 in the rivet 114, rebound damper oil flowing through the upper flow passages 89 can flow through the opening 121, the radial passage 126, the axial central passage 128 and in parallel to the flow through the orifice plate 98 to effect the damping force curve A illustrated in Figure 4. With this selection the hydraulic damper has the lowest damping force, for a soft, boulevard-type ride.

In the event that the operator desires an intermediate ride, the selector body 92 is rotated counterclockwise from the Figure 3 position until the selector body opening 121' is aligned with the passage 124. In this condition, the suspension-spring damping capability of the shock absorber is increased, and piston velocity on the rebound stroke is increased, as shown by curve B. The vehicle ride is accordingly at an intermediate condition.

If a hard ride is desired, the selector body 92 may be selectively rotated so that the opening 121' is in registry with the small-diameter passage 122. During rebound, flow through the passage 122 in parallel with the passage 105 and a passage 133 through the orifice plate 98 is restricted to its maximum degree. Under such conditions, valve restriction is the highest, and resistance to piston movement is further increased. With this action the suspension spring rate is in effect increased, as illustrated by curve C, so that the ride is harder, to provide a sports-car type of handling.

On compression, with the piston assembly 28 moving downwardly, the fluid in the cylinder tube 16 below the piston assembly 28 will flow through the passage 133 and the deflected spring disc pack 108 as well as the selected restricted passage to vary damping forces. However, since the compression loads are lighter, the curve spread and damping selection are reduced.

Although this invention has been specifically described as involving the use of three different selected flow control passages, additional passages can if desired be provided, to permit further variation of flow rates through the piston on rebound, for further tailoring of shock absorber action. If desired, also, all the auxiliary passages can be blocked, to provide a high degree of suspension spring checking and the stiffest ride, as illustrated by curve D.

The hydraulic damper in accordance with the invention thereby permits variable-damping characteristics to be obtained with minimal changes to a standard damper construction such as is shown for example in US-A-2 467 098, with the simplified construction in conformity with the present invention providing a wide range of damping characteristics in both jounce (that is, unit compression) and rebound (that is, unit extension).

## Claims

1. A hydraulic damper for controlling the spring action of vehicle suspension springs, in which a cylinder tube (16) has a hydraulic fluid therein, a valved piston (28) is mounted for linear stroking movement in the cylinder tube (16) and hydraulically separates the cylinder tube (16) into first and second chambers, deflectable-disc flow control valves (104, 108) are provided in the piston (28) for controlling the flow of hydraulic fluid between said chambers through the piston (28), to provide primary control of the damping force of the damper, a piston rod (30) connected to the piston (28) extends to the exterior of the damper, a rotatable actuator member (64) extends within the piston rod (30), and a rotatable selector body (92) is connected to the actuator member (64) for rotation thereby in order to open or close a plurality of selectable fluid-flow passages (122, 124, 126) in parallel with the deflectable-disc flow control valves (104, 108) for modifying and selectively varying and controlling the damping action of the damper, characterised in that the valved piston (28) comprises a cylindrical shell-like main body (88) fastened directly to an inner end (86) of the piston rod (30), the deflectable-disc flow control valves (104, 108) are located either side of an orifice plate (98) fixed in the main body (88) of the piston (28), there is a central connector (114) housed within the main body (88) of the piston (28), which connector (114) extends through said orifice plate (98) and said deflectable-disc flow control valves (104, 108) and contains said plurality of selectable fluid-flow passages (122, 124, 126) formed in a head portion (118) thereof housed within the main body (88) of the piston (28), and said selector body (92) is rotatably mounted on said head portion (118) and has a selector opening (121) formed therein which is selectively registrable with any of said fluid-flow passages (122, 124, 126).

2. A hydraulic damper according to claim 1, characterised in that the head portion (118) of the central connector (114) is cylindrical in shape and is housed within a cylindrical cavity (119) formed in a cylindrical shoulder portion (120) of the selector body (92), the selector opening (121) is a radial opening in the cylindrical shoulder portion (120) of the selector body (92), and the fluid-flow passages (122, 124, 126) comprise a plurality of variable-capacity passages extending through the central connector (114) and selected by turning the rotatable actuator member (64) to control the flow of hydraulic fluid between said chambers and thereby vary the damping characteristics of the hydraulic damper.

3. A hydraulic damper according to claim 2, characterised in that the fluid-flow passages (122, 124, 126) form restricted flow passages through the orifice plate (98) which bypass the deflectable valve discs (104, 108).

4. A hydraulic damper according to claim 2 or 3, characterised in that the deflectable valve discs (104, 108) each comprise a series of flat washer-like valve discs of spring steel having successively decreasing diameters, each connected at the centre thereof to the orifice plate (98) by the central connector (114), and the fluid-flow passages (122, 124, 126) extend through the central connector (114) and radially outwardly therefrom, through said head portion (118).

5. A hydraulic damper according to claim 4, characterised in that the selector body (92) is rotatably mounted within the confines of main body (88) of the piston (28), and the central connector (114) is in the form of a cylindrically-headed hollow rivet.

## Patentansprüche

1. Hydraulischer Dämpfer zur Steuerung der Federwirkung von Fahrzeugtragfedern, wobei ein Zylinderrohr (16) in sich Hydraulikfluid enthält, ein Kolben (28) mit Ventilen für lineare Stoßbewegungen in dem Zylinderrohr (16) angeordnet ist und das Zylinderrohr (16) hydraulisch in erste und zweite Kammern trennt, Ventile (104, 108) mit verformbaren Scheiben zur Durchflußsteuerung im Kolben (28) vorgesehen sind, um den Durchfluß von Hydraulikfluid durch den Kolben (28) zwischen den Kammern zu steuern, um für eine primäre Steuerung der Dämpfungskraft des Dämpfers zu sorgen, eine mit dem Kolben (28) verbundene Kolbenstange (30) sich nach außerhalb des Dämpfers erstreckt, ein rotierbares Betätigungsglied (64) sich innerhalb der Kolbenstange (30) erstreckt und ein rotierbarer Selektorkörper (92) mit dem Betätigungsglied (64) zur Rotation dadurch verbunden ist, um eine Mehrzahl von selektierbaren Fluiddurchflußpassagen (122, 124, 126), die parallel zu den Ventilen (104, 108) mit verformbaren Scheiben zur Durchflußsteuerung liegen, zur Modifizierung, selektiven Varierung und Steuerung der Dämpfungswirkung des Dämpfers zu öffnen oder zu schließen, dadurch gekennzeichnet, daß der Kolben (28) mit Ventilen aus einem zylindrischen, schalenähnlichen Hauptkörper (88) besteht, der direkt an einem inneren Ende (86) der Kolbenstange (30) befestigt ist, daß die Ventile (104, 108) mit verformbaren Scheiben zur Durchflußkontrolle beiderseits einer Mündungsplatte (98) festgelegt sind, die in dem Hauptkörper (88) des Kolbens (28) befestigt ist, daß ein zentrales Verbindungsglied (114) im Hauptkörper (88) des Kolbens (28) untergebracht ist, sich dieses Verbindungsglied (114) durch die Mündungsplatte (98) und die Ventile (104, 108) mit verformbaren Scheiben zur Durchflußkontrolle erstreckt und die Mehrzahl selektierbarer Fluiddurchflußpassagen (122, 124, 126) enthält, die in einem Kopfteil (118) desselben ausgebildet sind, das innerhalb des Hauptkörpers (88) des Kolbens (28) untergebracht ist, und daß der Selektorkörper (32) rotierbar auf dem Kopfteil (118) angebracht ist und eine Selektoröffnung (121) in sich ausgebildet hat, die mit jeder der Fluiddurchflußpassage (122, 124, 126) selektiv ausrichtbar ist.

2. Hydraulischer Dämpfer nach Anspruch 1, dadurch gekennzeichnet, daß das Kopfteil (118) des zentralen Verbindungsgliedes zylindrische Form hat und in einem zylindrischen Hohlraum (119) untergebracht ist, der in einem zylindrischen Schulterteil (120) des Selektorkörpers (92) ausgebildet ist, daß die Selektoröffnung (121) eine radiale Öffnung im zylindrischen Schulterteil (120) des Selektorkörpers (92) ist und die Fluiddurchflußpassagen (122, 124, 126) eine Mehrzahl von Passagen variabler Kapazitäten umfassen, die sich durch das zentrale Verbindungsglied (114) erstrecken und durch Drehen des rotierbaren Betätigungsgliedes (64) selektiert werden, um den Durchfluß von Hydraulikfluid zwischen den Kammern zu steuern und dadurch die Dämpfungscharakteristiken des hydraulischen Dämpfers zu variieren.

3. Hydraulischer Dämpfer nach Anspruch 2, dadurch gekennzeichnet, daß die Fluiddurchflußpassagen (122, 124, 126) durch die Mündungsplatte (98) hindurch eingeschränkte Durchflußpassagen bilden, die die verformbaren Ventilscheiben (104, 108) umgehen.

4. Hydraulische Dämpfer nach Anspruch 2 oder 3, dadurch gekennzeichnet, daß jede der verformbaren Ventilscheiben (104, 108) eine Serie von flachen Ventilscheiben, die Unterlegscheiben ähneln, aus federndem Stahl umfaßt, die aufeinanderfolgend kleiner werdende Durchmesser haben, an deren Zentrum jede mit der Mündungsplatte (98) durch das zentrale Verbindungsglied (114) verbunden ist, und daß sich die Fluiddurchflußpassagen (122, 124, 126) durch das zentrale Verbindungsglied (114) und davon radial nach außen durch den Kopfteil (118) erstrecken.

5. Hydraulischer Dämpfer nach Anspruch 4, dadurch gekennzeichnet, daß der Selektorkörper (92) innerhalb der Grenzen des Hauptkörpers (88) des Kolbens (28) angebracht ist, und daß das zentrale Verbindungsglied (114) die Form einer Hohlniete mit zylindrischem Kopf aufweist.

**Revendications**

1. Amortisseur hydraulique permettant d'assurer la régulation de l'action élastique de suspensions de véhicule, dans lequel un tube-cylindre (16) contient un fluide hydraulique, un piston à clapets (28) est monté de façon à pouvoir se déplacer suivant une course rectiligne dans ce tube cylindre (16) en une première et une seconde chambres, des clapets de régulation d'écoulement du type disque fléchissable (104, 108) sont prévus dans ce piston (28) afin d'assurer la régulation de l'écoulement du fluide hydraulique entre lesdites chambres à travers le piston (28) de manière à permettre une régulation principale de la force d'amortissement de l'amortisseur, une tige de piston (30) reliée au piston (28) s'étend à l'extérieur de l'amortisseur, une pièce rotative d'actionnement (64) s'étend à l'intérieur de cette tige de piston (30) et un corps sélecteur rotatif (92) est relié à cette pièce d'actionnement (64) de façon à être entraîné en rotation par celle-ci afin d'ouvrir ou ferner plusieurs passages d'écoulement de fluide pouvant être sélectionnés (122, 124, 126), en parallèle aux clapets de régulation d'écoulement du type disque fléchissable (104, 108), afin de modifier et faire varier de manière sélective l'action d'amortissement de l'amortisseur et d'assurer la régulation de celle-ci, caractérisé en ce que le piston à clapets (28) comprend un corps principal cylindrique (88) en forme de manchon, fixé directement sur une extrémité intérieure de la tige de piston (30), en ce que les clapets de régulation d'écoulement du type disque fléchissable (104, 108) sont disposés de part et d'autre d'une plaque (98) à orifices, fixée dans ce corps principal (88) du piston (28), en ce qu'il existe un organe central de jonction (114) logé à l'intérieur de ce corps principal (88) du piston (28), cet organe de jonction (114) s'étendant à travers la plaque (98) à orifices et les clapets de régulation d'écoulement du type disque fléchissable (104, 108) et contenant lesdits passages multiples d'écoulement de fluide pouvant être sélectionnés (122, 124, 126) ménagés dans une partie de tête (118) de cet organe de jonction qui est logée à l'intérieur du corps principal (88) du piston (28), et en ce que le corps sélecteur (92) est monté de manière rotative sur cette partie de tête (118) et comporte un orifice de sélection (121) qui y est ménagé et peut être amené de manière sélective en coïncidence avec l'un quelconque des passages d'écoulement de fluide (122, 124, 126).

2. Amortisseur hydraulique suivant la revendication 1, caractérisé en ce que la partie de tête (118) de l'organe central de jonction (114) est de forme cylindrique et est logée à l'intérieur d'une cavité cylindrique (119) ménagée dans une partie épaulée cylindrique (120) du corps sélecteur (92), en ce que l'orifice de sélection (121) est un orifice radial ménagé dans cette partie épaulée cylindrique (120) du corps sélecteur (92) et en ce que les passages d'écoulement de fluide (122, 124, 126) comprennent plusieurs passages de différentes capacités s'étendant à travers l'organe central de jonction (114) et sélectionnés en faisant tourner la pièce rotative d'actionnement (64) de manière à assurer la régulation de l'écoulement du fluide hydraulique entre lesdites chambres et à faire ainsi varier les caractéristiques d'amortissement de l'amortisseur hydraulique.

3. Amortisseur hydraulique suivant la revendication 2, caractérisé en ce que les passages d'écoulement du fluide (122, 124, 126) forment des passages étranglés d'écoulement qui traversent la plaque (98) à orifices et assurent une dérivation par rapport aux disques fléchissables formant clapet (104, 108).

4. Amortisseur hydraulique suivant la revendication 2 ou 3, caractérisé en ce que les disques fléchissables formant clapet (104, 108) comprennent chacun une série de disques de clapet en forme de rondelle plate et en acier à ressort, présentant des diamètres successivement décroissants, reliés chacun en son centre à la plaque (98) à orifices au moyen de l'organe central de jonction (114), et en ce que les passages d'écoulement de fluide (122, 124, 126) s'étendent à travers cet organe central de jonction (114), puis, en se dirigeant radialement vers l'extérieur à partir de celui-ci, à travers la partie de tête (118).

5. Amortisseur hydraulique suivant la revendication 4, caractérisé en ce que le corps sélecteur (92) est monté de manière rotative à l'intérieur des limites d'un corps principal (88) du piston (28) et en ce que l'organe central de jonction (114) se présente sous la forme d'un rivet creux à tête cylindrique.

Fig. 1

Fig. 2

Fig. 3

F (NEWTONS)

STROKES/MIN

Fig. 4